# EUROPÄISCHE PATENTSCHRIFT

(11) **EP 3 291 961 B1**
(45) Veröffentlichungstag und Bekanntmachung des Hinweises auf die Patenterteilung: **09.12.2020**
(21) Anmeldenummer: 16723674.4
(22) Anmeldetag: 29.04.2016
(51) Int. Cl.: B29C 49/02, B29C 49/42, B29C 49/22, B29C 49/00, B29C 49/04, B29L 22/00, B29D 22/00, B29L 31/00, B29C 48/00, B29C 48/09, B29C 48/14, B29K 23/00, B29K 101/12

(54) **VERFAHREN UND VORRICHTUNG ZUR HERSTELLUNG GROSSVOLUMIGER BEHÄLTER MIT FLANSCH DURCH KUNSTSTOFFBLASFORMEN**
METHOD AND DEVICE FOR PRODUCING LARGE VOLUME CONTAINERS WITH A FLANGE BY PLASTIC BLOW MOLDING
PROCÉDÉ ET DISPOSITIF POUR LA FABRICATION DE CONTENANTS DE GRAND VOLUME PRÉSENTANT UN REBORD PAR MOULAGE PAR SOUFFLAGE DE PLASTIQUE

(30) Priorität: 05.05.2015 DE 102015106960
(43) Veröffentlichungstag der Anmeldung: 14.03.2018
(73) Patentinhaber: Richter, Bodo, 53604 Bad Honnef (DE)
(72) Erfinder: RICHTER, Günter, 57610 Altenkirchen (DE)
(74) Vertreter: Schaumburg und Partner Patentanwälte mbB
(86) Internationale Anmeldenummer: PCT/EP2016/059606
(87) Internationale Veröffentlichungsnummer: WO 2016/177638

(56) Entgegenhaltungen:
- WO-A1-2013/113558
- WO-A2-2010/151724
- DE-U1-202010 000 953
- US-B1- 8 740 005

## Beschreibung

Die Erfindung betrifft ein Verfahren gemäß Anspruch 1 zum Herstellen von großvolumigen Behälterschalen aus Kunststoff, bei dem ein schlauchförmiger Vorformling aus Kunststoff im thermoplastischen Zustand mindestens einer Blasform im geöffneten Zustand zugeführt wird. Weiterhin betrifft die Erfindung eine Vorrichtung gemäß Anspruch 8 zum Herstellen derartiger großvolumiger Behälterschalen aus Kunststoff.

Großvolumige Behälter in geschlossener Form mit einem Fassungsvermögen von bis zu 10 000 Litern dienen als Trinkwassertanks, Abwassertanks, Fäkalienbehälter, Regenauffangbehälter, Feuerlöschreservoirs und vieles mehr. Derartige geschlossene Behälter werden typischerweise im Blasformverfahren hergestellt. Besonders bei großvolumigen Behältern entstehen hohe Transport- und Handlingskosten. Aus DE 10 2010 004 586 A1 desselben Anmelders ist eine Vorrichtung und ein Verfahren zum Herstellen großvolumiger Hohlkörper aus Kunststoff bekannt. Eine Vakuumkammer, die eine Blasform und einen Vorformling vollständig umgibt, ist luftdicht abgedichtet. Der Vorformling enthält eine Kunststoffschaumschicht, die unter Vakuum aufschäumt.

Aus der DE 10 2013 102 325 A1 ist weiterhin ein Verfahren und eine Vorrichtung zur Herstellung großflächiger Hohlkörper aus thermoplastischem Kunststoff bekannt, wobei nebeneinander angeordnete Vorformlinge getrennt voneinander in einer Blasform gleichzeitig geblasen werden. Mindestens zwei Extrusionsköpfe sind im Abstand voneinander angeordnet und extrudieren gleichzeitig die Vorformlinge.

WO 2013/113558 A1 betrifft ein Verfahren zur Herstellung eines Kunststoffartikels sowie Teile des Blasformwerkzeuges. Im Blasformwerkzeug erfolgt teilweise eine Vorformung, danach eine Auftrennung des Vorformlings in mindestens zwei Teile. Danach wird ein Zwischenrahmen zwischen den beiden Formhälften entfernt. Danach wird mindestens ein Einbauteil auf der Innenseite des noch warmen Vorformlings eingebracht, woraufhin das Blasformwerkzeug mit den beiden Teilen des Vorformlings wieder geschlossen wird und danach erfolgt das vollständige Ausformen des Vorformlings zu einem Hohlkörper.

Dokument US 8,740,005 B1 betrifft ein Spritzgießverfahren (injection molding) für einen Kunststoffbehälter. Bei diesem Spritzgießverfahren wird Kunststoffmasse in eine Spritzgußform unter Druck eingefüllt, wodurch zwei Behälterschalen erzeugt werden. Am Flansch der jeweiligen Behälterschalen werden durch das Spritzgußwerkzeug Rillen ausgebildet, in die eine elastische Dichtung zur Abdichtung der beiden verbundenen Behälter eingelegt werden kann.

Es ist Aufgabe der Erfindung, großvolumige Behälterschalen auf wirtschaftliche Weise herzustellen und Transport- sowie Handlingskosten zu reduzieren.

Diese Aufgabe wird für ein Verfahren durch die Merkmalskombination nach dem Anspruch 1 gelöst. Vorteilhafte Weiterbildungen sind in den abhängigen Ansprüchen angegeben.

Gemäß der Erfindung wird ein schlauchförmiger Vorformling aus Kunststoff im thermoplastischen Zustand von einer Blasformanlage bereitgestellt. Dieser noch formbare Vorformling wird über einen Formrahmen geführt, dem mindestens eine Blasform im geöffneten Zustand gegenübersteht. Beim Schließen der Blasform formt der Formrahmen im Zusammenwirken mit dem Rand der Blasform und somit am äußeren Rand der Behälterschale einen umlaufenden Flansch aus. Nach dem Ausformen der Behälterschale in der Blasform wird die Behälterschale entlang dem Formrahmen von diesem freigeschnitten. Auf diese Weise wird ein großvolumiger offener halbschaliger Behälter aus Kunststoff erzeugt, der an seinem Rand einen ebenen Flansch besitzt. Mehrere solcher bzw. ähnliche offene Behälterschalen können ineinander gestapelt zum Bestimmungsort transportiert werden. Zwei Behälterschalen mit zueinander passendem Flansch werden entlang der beiden Flansche miteinander verbunden, beispielsweise unter Zuhilfenahme einer Dichtung miteinander verschraubt, und bilden so am Bestimmungsort einen großvolumigen geschlossenen Behälter. Vorzugsweise stellt der Flansch eine umlaufende plan parallele Verbindungsfläche mit einer ausreichenden Flanschdicke bereit, so dass eine stabile Verbindung zwischen zwei Flanschen hergestellt werden kann. In einem einzigen Transport können mehrere Behälterschalen vom Herstellungsort zu einem teils weit entfernten Bestimmungsort transportiert werden, so dass Transportkosten verringert sind. Aufgrund der vorhandenen Flansche ist am Bestimmungsort die Hantierung zum Fertigstellen des großvolumigen geschlossenen Behälters einfach, wodurch entsprechende Kosten klein bleiben.

Durch Verwenden des Blasformverfahrens sind die Behälterschalen und somit der geschlossene Behälter wirtschaftlich und kostengünstig herzustellen. Andere Herstellungsverfahren, wie beispielsweise Tiefziehen, scheiden aus Kostengründen und der mangelnden Möglichkeit zur Herstellung eines Flansches aus. Auch das Rotationssintern ist wirtschaftlich nicht sachgemäß, da eine Verarbeitung von hochmolekularen Werkstoffen, wie beispielsweise Polyethylen, nicht möglich und die Ausbringungsleistung wegen langer Abkühlzeiten gering ist. Auch das Spritzgussverfahren ist nicht wettbewerbsfähig, denn die sehr hohen Werkzeugkosten und die notwendige Größe von entsprechenden Spritzgussmaschinen sind technisch und wirtschaftlich nicht verfügbar.

Beim zuvor beschriebenen Verfahren ist es möglich nur eine einzige Halbschale des Behälters zu fertigen, wobei nach dem Freischneiden vom Formrahmen ein großer Rest an Kunststoffmaterial verbleibt, was wirtschaftlich nicht optimal ist. Daher wird gemäß einer Weiterentwicklung des Verfahrens eine weitere Blasform verwendet, die der genannten Blasform gegenübersteht. Der Formrahmen ist hier zwischen den beiden Blasformen angeordnet und der schlauchförmige Vorformling wird über diesen Formrahmen geführt. Beim Blasformen wird gleichzeitig in den beiden Blasformen jeweils ein halbschaliger Behälterteil ausgebildet. Danach werden die beiden offenen Behälterschalen entlang dem Formrahmen von diesem freigeschnitten. Bei dieser Weiterbildung wird also die Blasformanlage mit zwei Blasformen effizient genutzt und die gefertigten Behälterhalbschalen und ihre Flansche sind genau zueinander passend ausgerichtet, so dass sie bei einer Verbindung am Bestimmungsort in optimaler Weise einen großvolumigen geschlossenen Behälter bilden.

Vorteilhaft ist es, wenn der Formrahmen aus mehreren zusammenfahrbaren und auseinanderfahrbaren Form-Elementen besteht, so dass in Querrichtung des Schlauchs des Vorformlings gesehen beim Überstülpen des Vorformlings der Formrahmen eine kleinere dimensionale Ausdehnung hat als der innere Durchmesser des Vorformlings. Beim Kunststoff-Blasformen nimmt der Formrahmen dann einen ausgefahrenen gespreizten Zustand an, bei dem der äußere Rand des Formrahmens mindestens bis zum äußeren Rand der jeweiligen Blasform ragt, um im Zusammenwirken mit diesem Rand den umlaufenden Flansch auszuformen. Auf diese Weise kann der von einem Schmelzenkopf der Blasformanlage ausgestoßene schlauchförmige Vorformling mit relativ kleinem Schlauchdurchmesser problemlos über den Formrahmen geführt werden und diesen umhüllen. Durch Einblasen von Druckluft und Spreizen des Formrahmens wird auch der Vorformling entsprechend gedehnt, so dass bei geschlossenen Blasformen der Flansch zwischen Blasformrand und Formrahmen ausgebildet und der Vorformling in die jeweilige Blasform gedrückt wird. Nach dem Erkalten in der jeweiligen Blasform wird die Behälterschale nach dem Freischneiden vom Formrahmen entnommen.

Weiterhin ist es vorteilhaft, wenn bei der Ausbildung des Flansches Verschraubungslöcher Erfindungsgemäß wird eine umlaufende Nut zur Aufnahme eines Dichtelements mitgeformt.

Damit wird es vereinfacht, zwei Behälterhalbschalen am Bestimmungsort miteinander zum großvolumigen und fluiddicht geschlossenen Behälter zu verbinden.

Gemäß einem weiteren Aspekt der Erfindung wird eine Vorrichtung zum Herstellen von großvolumigen Behälterschalen aus Kunststoff angegeben. Die mit dieser Vorrichtung erzielbaren technischen Vorteile stimmen im Wesentlichen mit denen überein, die mit dem zuvor beschriebenen Verfahren erzielbar sind.

Ausführungsbeispiele der Erfindung werden nachfolgend anhand der Zeichnung erläutert. Darin zeigt:
- Figur 1: einen Querschnitt durch offene Behälterschalen mit jeweils umlaufendem Flansch,
- Figur 2: eine perspektivische Ansicht von Behälterschalen,
- Figur 3: schematisch die Anordnung zweier Blasformen mit dazwischen angeordnetem Formrahmen,
- Figur 4: eine Darstellung mit gespreiztem Formrahmen,
- Figur 5: eine Darstellung mit geschlossenen Blasformen,
- Figur 6: den Zustand nach dem Abkühlen der Kunststoffmasse und geöffneten Blasformen,
- Figur 7: eine Ansicht auf den Formrahmen im geschlossenen und im geöffneten Zustand,
- Figur 8: eine Darstellung seitlich auf den Formrahmen im eingefahrenen und im gespreizten Zustand,
- Figur 9: eine Draufsicht auf den Formrahmen in geschlossener und gespreizter Stellung,
- Figur 10: eine seitliche Ansicht mit verschiedenen Zuständen der Blasformung,
- Figur 11: eine seitliche Ansicht mit teils geöffneter und vollständig geöffneter Blasform.

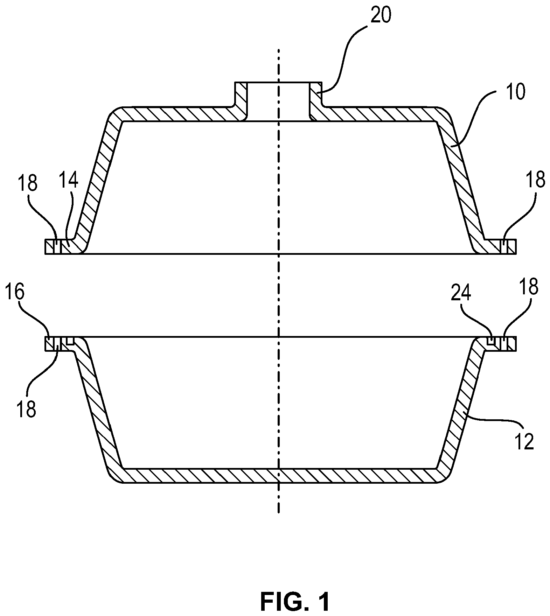

Figur 1 zeigt in einem Querschnitt die in einer Blasformanlage hergestellten offenen Behälterschalen 10, 12, mit jeweils umlaufendem Flansch 14, 16. Im jeweiligen Flansch 14, 16 sind Durchgangslöcher 18 und im Flansch 16 ist eine umlaufende Nut 24 ausgeformt. Die Behälterschalen 10, 12 werden im offenen Zustand vom Herstellungsort zum Bestimmungsort transportiert und dort entlang den Flanschen 14, 16 miteinander durch Verschrauben fluiddicht verbunden. Der so gebildete großvolumige geschlossene Behälter dient am Bestimmungsort als Trinkwassertank, Abwassertank, Fäkalienbehälter, Regenauffangbehälter, Feuerlöschreservoir, etc.. In der oberen Behälterschale 10 ist eine Einstiegsöffnung 20 ausgebildet.

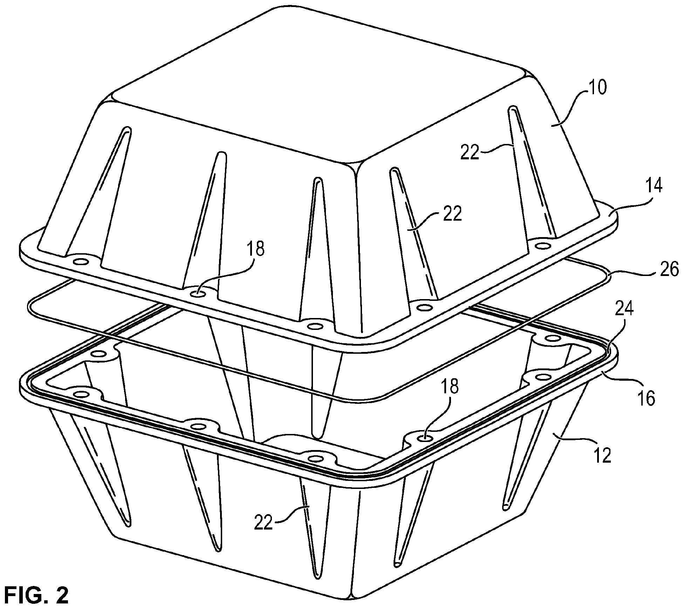

Figur 2 zeigt eine perspektivische Ansicht der Behälterschalen 10, 12, die jeweils Versteifungselemente 22 aufweisen. Der Flansch 16 enthält die umlaufende Nut 24, in die ein Dichtelement 26 zum fluiddichten Verbinden der Flansche 14, 16 eingesetzt wird.

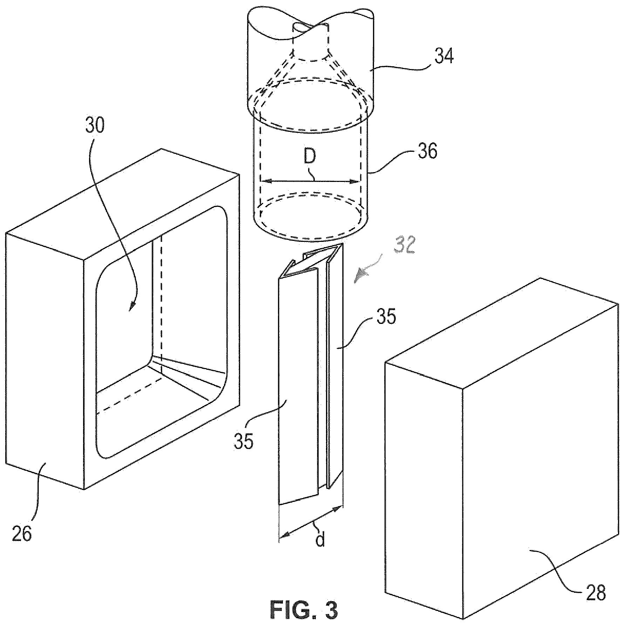

Figur 3 zeigt schematisch die Anordnung zweier Blasformen 26, 28 mit jeweils einer entsprechend Kavität 30 zum Ausformen der Behälterschalen 10, 12. Die Blasformen 26, 28 sind hier im geöffneten Zustand mit Abstand voneinander gezeigt und in ihrem Zwischenraum ist ein Formrahmen 32 angeordnet. Aus einem Schmelzenkopf 34 der Blasformanlage wird ein schlauchförmiger Vorformling 36 im noch thermoplastischen Zustand ausgestoßen. Als Kunststoff wird vorzugsweise hochmolekulares Polyethylen verwendet. Sein innerer Durchmesser D ist größer als die Breite d des gesamten Formrahmens 32 in seinem eingefahrenen Zustand, so dass der Vorformling 36 frei über den Formrahmen 32 nach unten geführt werden kann und damit den Formrahmen 32 vollständig umhüllt. Der Formrahmen 32 umfasst in Querrichtung aus- und einfahrbare Form-Elemente 35.

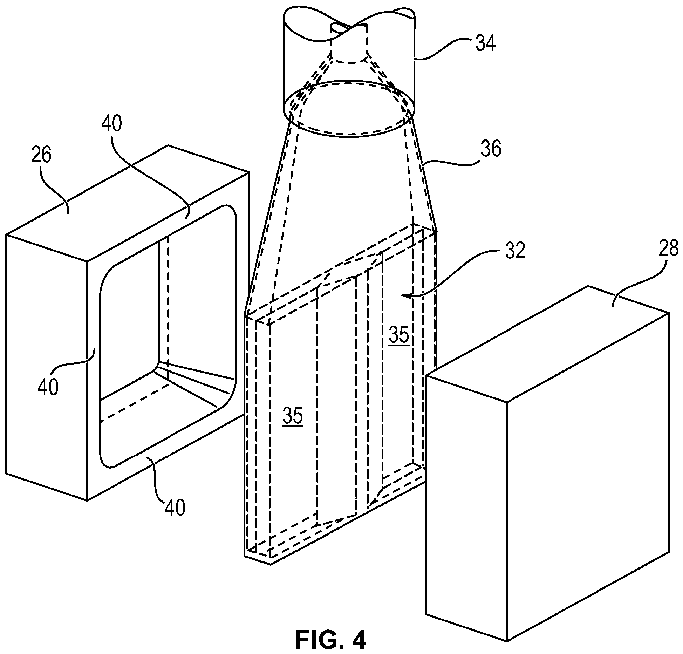

In Figur 4 ist der Vorformling 36 so weit nach unten geführt, dass sein unteres Ende mindestens bis zur unteren Abmessung der einander gegenüberstehenden Blasformen 26, 28 ragt. Der Formrahmen 32 ist mit seinen Form-Elementen 35 seitlich ausgefahren und spreizt dabei den ihn umhüllenden Vorformling 36. In diesem ausgefahrenen Zustand des Formrahmens 32 stehen außenseitige Abschnitte der Form-Elemente 35 an allen vier Seiten Rahmenabschnitten 40 der Blasformen 26, 28 gegenüber.

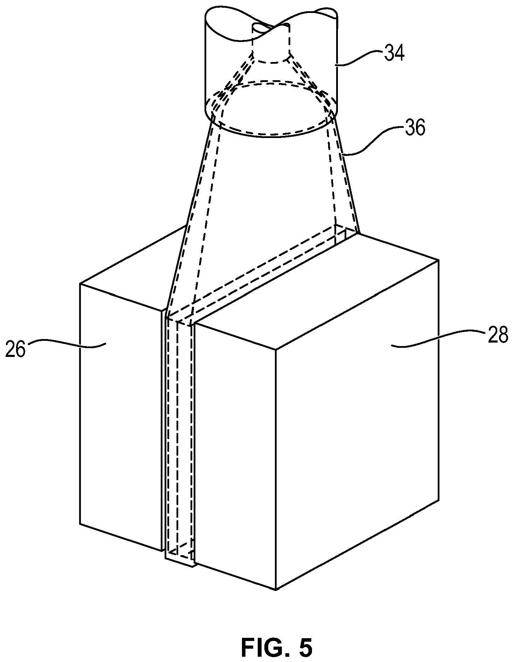

In Figur 5 sind die Blasformen 26, 28 geschlossen, wobei die Form-Elemente 35 des Formrahmens 32 am Rand der jeweiligen Blasform 26, 28 und somit am äußeren Rand der zu formenden Behälterschalen 10, 12 auf jeder Seite der Blasform 26, 28 den Flansch 14, 16 durch Pressen zwischen der jeweiligen Blasform 26, 28 ausformen. Durch Einblasen von Blasluft in den Formrahmen 32 wird in den Kavitäten 30 der Blasformen 26, 28 die jeweilige Behälterschale 10, 12 ausgeformt.

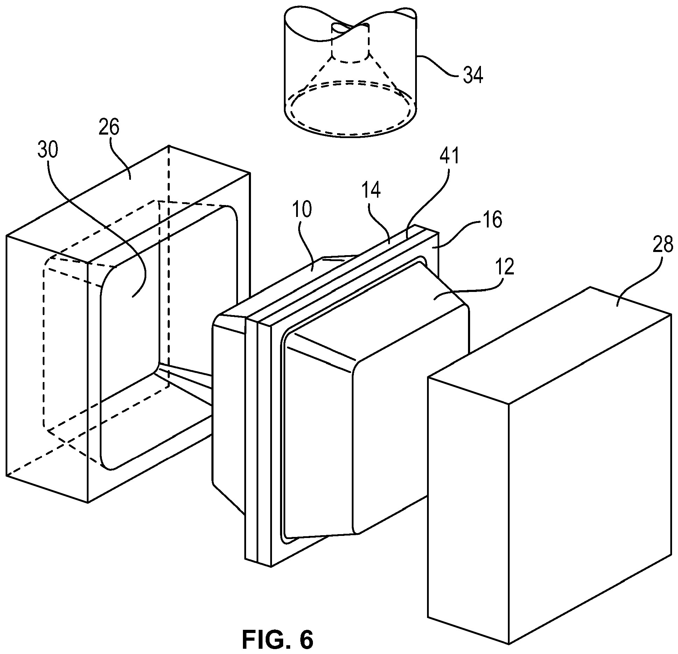

Figur 6 zeigt einen Zustand nach dem Abkühlen der Kunststoffmasse in den Blasformen 26, 28. Die beiden Behälterschalen 10, 12 werden entlang einer Linie 41 vom mit Kunststoff umhüllten Formrahmen 32 freigeschnitten und die Behälter 10, 12 mit jeweils umlaufendem Flansch 14, 16 werden der Blasformanlage entnommen.

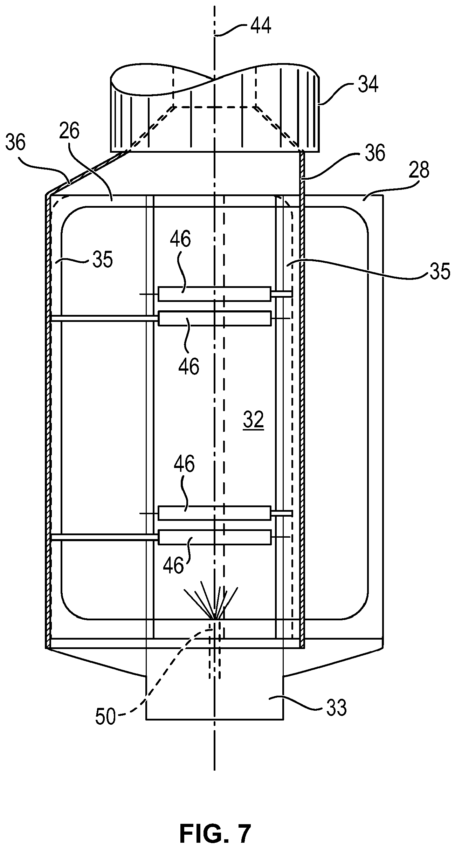

Figur 7 zeigt eine Ansicht auf den Formrahmen 32 in zwei Zuständen. Rechts einer Mittelachse 44 ist der Formrahmen 32 mit zugehörigem Form-Element 35 im eingefahrenen Zustand dargestellt, in welchem der Vorformling 36 den Formrahmen 32 umhüllend nach unten geführt ist. Links der Mittelachse 44 ist der Formrahmen 32 im ausgefahrenen Zustand, wobei er den schlauchförmigen Vorformling 36 nach außen spreizt. Innerhalb des Formrahmens 32 sind vier hyraulische oder elektrische Linearantriebe 46 angeordnet, die die Form-Elemente 35 des Formrahmens 32 in den ausgefahrenen oder den eingefahrenen Zustand bewegen. Am unteren Ende des Formrahmens 32 ist eine Blasluftzuführung 50 enthalten, über die Blasluft zur Blasformung eingeblasen werden kann. Wie zu erkennen ist, ragt der Vorformling 36 über die untere Kante des Formrahmens 32 hinaus, um im geschlossenen Zustand der Blasformen 26, 28 genügend Kunststoffmaterial vorhanden zu haben, um die umlaufenden Flansche 14, 16 auszubilden.

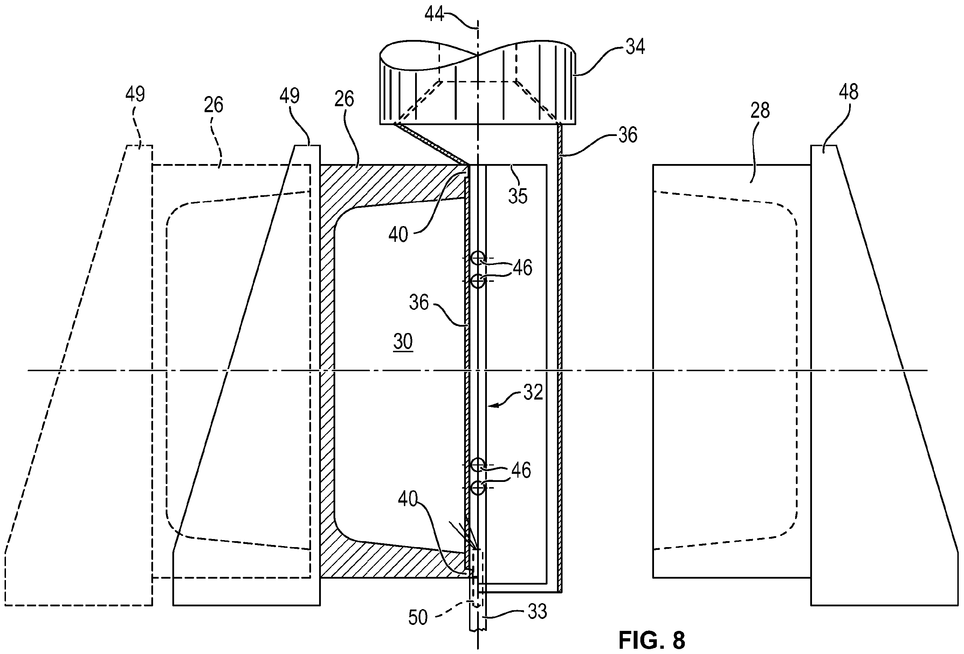

Figur 8 zeigt eine Darstellung mit Blick von der Seite auf den Formrahmen 32. Rechts von der Mittelachse 44 ist ein Zustand gezeigt, bei der ein Schließelement 48 die Blasform 26 in geöffneter Stellung hält. Der Vorformling 36 ist über den eingefahrenen Formrahmen 32 geführt. Links der Mittelachse 44 ist ein Zustand zu sehen, bei dem ein weiteres Schließelement 49 die zugehörige Blasform 26 aus einer gestrichelt gezeichneten offenen Stellung in die geschlossene Stellung bewegt hat. Der Formrahmen 32 befindet sich im ausgefahrenen Zustand und seine Form-Elemente 35 pressen den Vorformling 36 gegen die Randabschnitte 40 der Blasform 26, um den Flansch 16 auszubilden. Über die Blasluftzufuhr 50 wird Blasluft eingeblasen und die Wand des Vorformlings 36 legt sich an die Innenseite der Kavität 30 der Blasform 26 an, wodurch die zugehörige Behälterschale 10 ausgeformt wird. Der Formrahmen 32 ist von unten durch eine Halterung 33 gehalten.

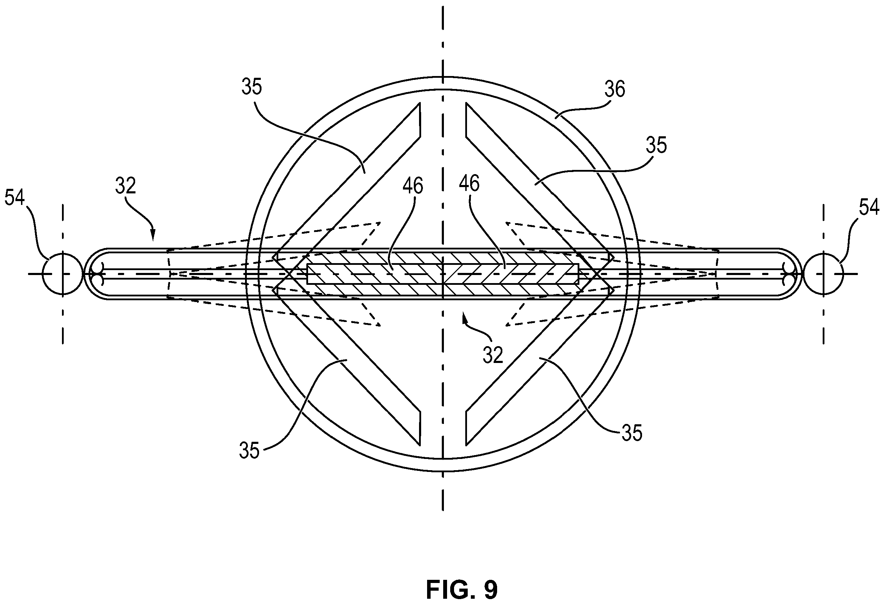

Figur 9 zeigt eine Draufsicht von oben auf den Formrahmen 32. Es sind zwei Zustände des Formrahmens 32 gezeigt. Einmal befindet sich der Formrahmen 32 im eingefahrenen Zustand, bei dem seine Form-Elemente 35 innerhalb des vom Schmelzenkopf 34 ausgestoßenen Schlauchs des Vorformlings 36 angeordnet sind. In diesem Zustand wird der Vorformling 36 über den Formrahmen 32 nach unten geführt. Weiterhin ist ein ausgefahrener Zustand des Formrahmens 32 gezeigt, bei dem die Form-Elemente 35 mit Hilfe der Linearantriebe 46 nach außen gefahren sind. Hierbei führen die Form-Elemente 35 auch die Wand des Vorformlings 36 mit und spreizen diesen. Nach dem Ausformen der Behälterschalen 10, 12 in den Blasformen 26, 28 und der Ausbildung der Flansche 14, 16 an den äußeren Abschnitten der Form-Elemente 35 werden die Behälterschalen 10, 12 vom Formrahmen 32 freigeschnitten, wozu eine Schneidevorrichtung 54 mit umlaufendem Messer angeordnet ist.

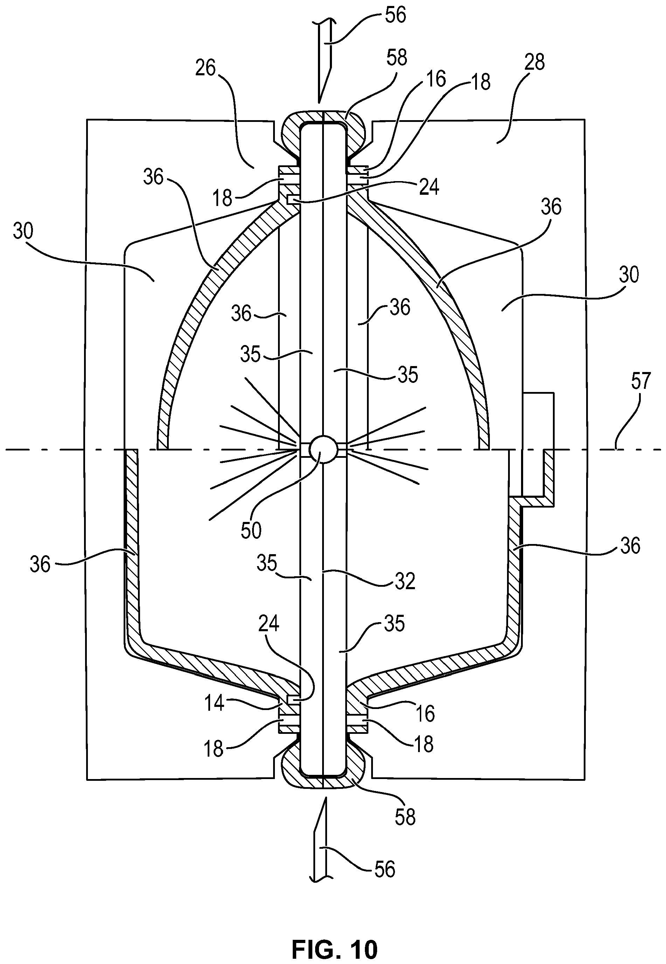

Figur 10 zeigt in einer Draufsicht zwei Zustände oberhalb und unterhalb einer Mittellinie 57. Die Blasformen 26, 28 befinden sich jeweils in der geschlossenen Stellung mit mittig angeordnetem Formrahmen 32. Im oberen Bildteil ist gezeigt, dass die über die Blasluftzuführung 50 zugeführte Blasluft den Vorformling 36 ausdehnt, so dass dieser in die Kavität 30 der Blasformen 26, 28 gezwungen wird. Gleichzeitig wird bei diesem Ausführungsbeispiel an die Kavitäten 30 der Blasformen 26, 28 ein Vakuum angelegt, welches die Ausdehnbewegung des Vorformlings 36 unterstützt und sich dieser an der Innenwand der Kavitäten 30 anlegt. Bei diesem Beispiel ist der Vorformling 36 mehrschichtig und enthält als mittlere Schicht eine Schaumstruktur. Zur Ausbildung dieser Schaumstruktur ist ein verringerter Blasdruck erforderlich, was durch das Anlegen des Vakuums ermöglicht wird. Hierbei wird der Vorformling 36 umlaufend dichtend gegen die äußeren Abschnitte der Form-Elemente 35 des Formrahmens 32 gedrückt, so dass sich zwischen den Blasformen 26, 28 und dem Vorformling 36 das Vakuum aufbauen kann.

Wie zu erkennen ist, sind die Blasformen 26, 28 so gestaltet, dass sich im äußeren Bereich der Form-Elemente 35 ein Abquetschrand 58 ergibt. Entlang diesem Abquetschrand 58 wird dann mit Hilfe der Schneidvorrichtung 54 und zugehörigen Messern 56 umlaufend der Abquetschrand 58 freigeschnitten, wobei dann dieser Abquetschrand 58 Abfall ist. Die Blasformen 26, 28 sind an ihren Randabschnitten so ausgebildet, dass sich die umlaufenden ebenen Flansche 14, 16 mit Durchgangsöffnungen 18 ausbilden.

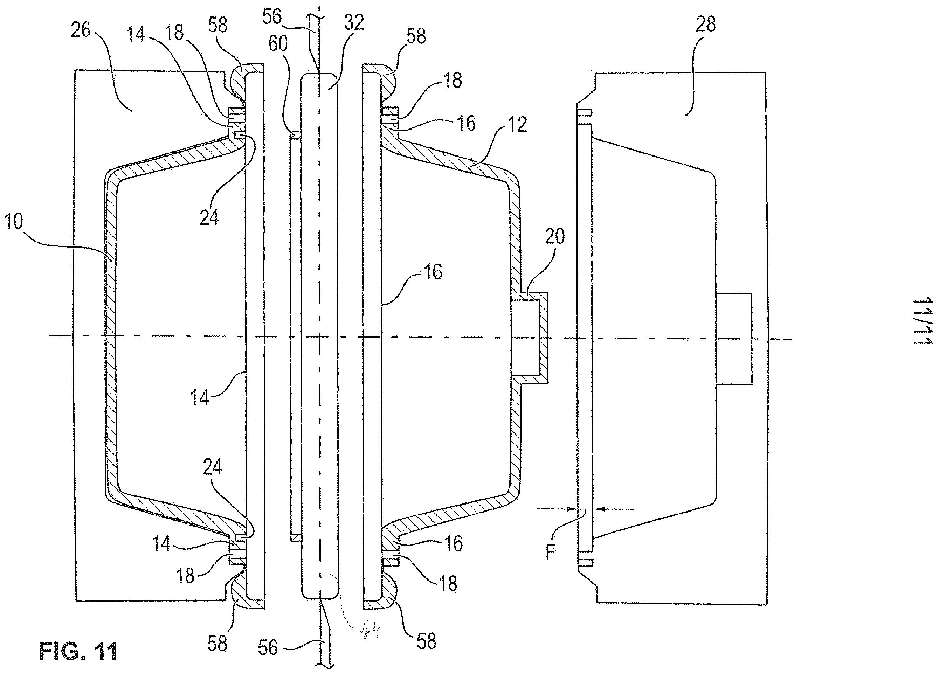

Figur 11 zeigt in einer seitlichen Ansicht zwei Zustände. Links der Mittelachse 44 ist der Zustand mit teils geöffneter Blasform 26 dargestellt. Die Behälterschale 10 ist vom Formrahmen 32 freigeschnitten. Im rechten Bildteil ist die Blasform 28 in geöffneter Endstellung und die Behälterschale 12 kann entnommen und die Teile des Abquetschrandes 58 dem Abfall zugeführt werden. Im Flansch 14 wurde durch ein umlaufendes Nutformelement 60 auf dem Formrahmen 32 die umlaufende Nut 24 zur späteren Aufnahme einer Dichtung ausgebildet. Die Flansche 14, 16 werden durch Pressen zwischen den äußeren Abschnitten des Formrahmens 32 und den Randabschnitten 40 der Blasformen 26, 28 geformt. Ein Flanschmaß F in den Blasformen 26, 28 ist dabei mindestens 20 % kleiner als die Dicke des Vorformlings 36.

Die Form-Elemente 35 könnten mit Hilfe von Antrieben zusammenklappbar oder verschiebbar ausgeführt sein. Vorteilhaft ist es, wenn die Form-Elemente im gespreizten Zustand eine plane Fläche bilden. Vorteilhaft ist es auch, wenn nach dem Freischneiden der Behälterschalen vom Formrahmen dieser vor der Entnahme der Behälterschalen nach unten oder nach oben weg von den Blasformen herausgezogen wird. Bei Verwendung einer Ko-Extrusionsanlage kann der schlauchförmige Vorformling mehrere unterschiedliche Kunststoffschichten enthalten.

### Bezugszeichenliste

- 10, 12: Behälterschalen
- 14, 16: Flansch
- 18: Durchgangslöcher
- 20: Einstiegsöffnung
- 22: Versteifungselemente
- 24: Nut
- 26, 28: Blasformen
- 30: Kavität
- 32: Formrahmen
- 34: Schmelzenkopf
- 36: Vorformling
- D: Innerer Durchmesser des Vorformlings
- d: Breite des Formvolumens
- 35: Form-Elemente
- 41: Linie
- 44: Mittelachse
- 46: Linearantriebe
- 50: Blasluftzuführung
- 48: Schließelement
- 49: weiteres Schließelement
- 54: Schneidevorrichtung
- 56: Messer
- 57: Mittellinie
- 58: Abquetschrand
- 60: Nutformelement
- F: Flanschmaß

## Patentansprüche

1. Verfahren zum Herstellen eines großvolumigen Behälters umfassend zwei Behälterschalen (10, 12) aus Kunststoff,
bei dem ein schlauchförmiger Vorformling (36) aus Kunststoff im thermoplastischen Zustand über einen Formrahmen (32) geführt wird, dem zwei Blasformen (26, 28) im geöffneten Zustand gegenüberstehen,
die Blasformen (26, 28) geschlossen werden, wobei der Formrahmen (32) am Rand der jeweiligen Blasform (26, 28) und somit am äußeren Rand der jeweiligen Behälterschale (10, 12) einen umlaufenden Flansch (14, 16) ausformt die Behälterschalen (10, 12) in den Blasformen (26, 28) durch Kunststoff-Blasformen gleichzeitig ausgebildet werden,
wobei bei der Ausbildung des Flansches (14) einer der Behälterschalen (10) eine umlaufende Nut (24) zur späteren Aufnahme einer Dichtung durch ein umlaufendes Nutformelement (60) auf dem Formrahmen (32) mitgeformt wird.
nach dem Abkühlen der Kunststoffmasse in den Blasformen (26, 28) die Behälterschalen (10, 12) entlang dem Formrahmen (32) von diesem freigeschnitten und den Blasformen (26, 28) entnommen werden,
mindestens zwei Behälterschalen (10, 12) mit einem jeweiligen Fassungsvermögen von 250 bis 5 000 l vom Herstellungsort zu einem Bestimmungsort transportiert und dort an ihren umlaufenden Flanschen (14, 16) zum großvolumigen Behälter verbunden werden.

2. Verfahren nach Anspruch 1, **dadurch gekennzeichnet, dass** der Flansch (14, 16) durch Pressen des thermoplastischen Vorformlings (36) zwischen der Blasform (26, 28) und dem Formrahmen (32) gebildet wird.

3. Verfahren nach einem der vorhergehenden Ansprüche 1 oder 2, **dadurch gekennzeichnet, dass** der Formrahmen (32) aus mehreren zusammen- und auseinanderfahrbaren Form-Elementen (35) besteht, so dass in Querrichtung des Schlauchs des Vorformlings (36) gesehen beim Führen des schlauchförmigen Vorformlings (36) der Formrahmen (32) eine kleinere dimensionale Ausdehnung hat als der innere Durchmesser (D) des Vorformlings (36), und dass beim Kunststoff-Blasformen der Formrahmen (32) einen gespreizten Zustand einnimmt.

4. Verfahren nach einem der vorhergehenden Ansprüche, **dadurch gekennzeichnet, dass** als Kunststoff hochmolekulares Polyethylen verwendet wird.

5. Verfahren nach einem der vorhergehenden Ansprüche, **dadurch gekennzeichnet, dass** der Vorformling (36) mehrschichtig ist und mindestens eine Schicht eine Schaumstruktur aufweist.

6. Verfahren nach Anspruch 5, **dadurch gekennzeichnet, dass** zur Ausbildung der Schaumstruktur die jeweilige Blasform (26, 28) so ausgebildet ist, dass auf den Vorformling (36) ein Vakuum einwirkt.

7. Verfahren nach einem der vorhergehenden Ansprüche, bei dem bei der Ausbildung des Flansches (14, 16) Verschraubungslöcher (18) mitgeformt werden.

8. Vorrichtung zum Herstellen von großvolumigen Behälterschalen (10, 12) aus Kunststoff,
bei der eine Extrusionseinrichtung aus einem Schmelzenkopf (34) einen schlauchförmigen Vorformling (36) aus Kunststoff ausstößt, der im thermoplastischen Zustand über einen Formrahmen (32) geführt wird, dem zwei Blasformen (26, 28) im geöffneten Zustand gegenüberstehen,
ein umlaufendes Nutformelement (60) auf dem Formrahmen (32) bei der Ausbildung des Flansches einer der Behälterschalen eine umlaufende Nut zur späteren Aufnahme einer Dichtung mitformt, und
eine Schneidevorrichtung (54) die Behälterschalen entlang dem Formrahmen freischneidet.

9. Vorrichtung nach einem Anspruch 8, **dadurch gekennzeichnet, dass** der Formrahmen (32) aus mehreren zusammen- und auseinanderfahrbaren Form-Elementen (35) besteht, so dass in Querrichtung des Schlauchs des Vorformlings (36) gesehen beim Führen des schlauchförmigen Vorformlings (36) der Formrahmen (32) eine kleinere dimensionale Ausdehnung hat als der innere Durchmesser (D) des Vorformlings (36), und dass beim Kunststoff-Blasformen der Formrahmen (32) einen gespreizten Zustand einnimmt.

10. Vorrichtung nach einem der vorhergehenden Ansprüche, **dadurch gekennzeichnet, dass** zur Ausbildung der Schaumstruktur die jeweilige Blasform (26, 28) so ausgebildet ist, dass auf den Vorformling (36) ein Vakuum einwirkt.

11. Vorrichtung nach einem der vorhergehenden Ansprüche, bei der die jeweilige Behälterschale (10, 12) ein Fassungsvermögen von 250 bis 5000 l, insbesondere von 1000 bis 4000 l aufweist.

## Claims

1. A method for producing a large-volume container comprising two container shells (10, 12) from plastic material,
in which a tube-shaped preform (36) of plastic material in a thermoplastic state is passed over a mold frame (32) which faces two blow molds (26, 28) in the open state,
the two blow molds (26, 28) are closed, wherein the mold frame (32) forms a circumferential flange (14, 16) at the edge of the respective blow mold (26, 28) and thus at the outer edge of the respective container shell (10, 12),
the container shells (10, 12) are formed in the blow molds (26, 28) simultaneously by plastic blow molding,
wherein during the forming of the flange (14) of one the container shells (10) also a circumferential groove (24) is formed by means of a circumferential groove forming element (60) on the mold frame (32) which groove is designed to receive a seal at a later point in time,
after cooling of the plastic material in the blow molds (26, 28) the container shells (10, 12) are cut free from the mold frame (32) along the mold frame (32) and are taken out of the blow molds (26, 28),
at least two container shells (10, 12) each with a capacity of 250 to 5,000 l are transported from the place of manufacture to a destination and are connected there at their circumferential flanges (14, 16) to form the large-volume container.

2. The method according to claim 1, **characterized in that** the flange (14, 16) is formed by pressing the thermoplastic preform (36) between the blow mold (26, 28) and the mold frame (32).

3. The method according to one of preceding claims 1 or 2, **characterized in that** the mold frame (32) is made up of several retractable and extendable mold elements (35) so that, as viewed in the transverse direction of the tube of the preform (36), upon guidance of the tube-shaped preform (36), the mold frame (32) has a smaller dimensional size than the inner diameter (D) of the preform (36), and that during plastic blow molding the mold frame (32) assumes a spread-out state.

4. The method according to one of the preceding claims, **characterized in that** high-molecular polyethylene is used as plastic material.

5. The method according to one of the preceding claims, **characterized in that** the preform (36) is a multilayer preform and at least one layer presents a foam structure.

6. The method according to claim 5, **characterized in that** for forming the foam structure the respective blow mold (26, 28) is designed such that a vacuum acts on the preform (36).

7. The method according to one of the preceding claims, in which during the formation of the flange (14, 16) screwing holes (18) are formed as well.

8. A device for producing large-volume container shells (10, 12) from plastic material,
in which an extrusion device ejects from a molten material head (34) a tube-shaped preform (36) of plastic material, which is passed in a thermoplastic state over a mold frame (32) which faces two blow molds (26, 28) in the open state,
a circumferential groove forming element (60) on the mold frame (32) forms during the forming of the flange of one of the container shells also a circumferential groove designed to receive a seal at a later point in time, and
a cutting device (54) cuts the container shells free along the mold frame.

9. The device according to claim 8, **characterized in that** the mold frame (32) is made up of several retractable and extendable mold elements (35) so that, as viewed in transverse direction of the tube of the preform (36), during guidance of the tube-shaped preform (36), the mold frame (32) has a smaller dimensional size than the inner diameter (D) of the preform (36), and that during plastic blow molding the mold frame (32) assumes a spread-out state.

10. The device according to one of the preceding claims, **characterized in that** for forming the foam structure the respective blow mold (26, 28) is designed such that a vacuum acts on the preform (36).

11. The device according to one of the preceding claims, in which the respective container shell (10, 12) has a capacity from 250 to 5,000 l, in particular from 1,000 to 4,000 l.

## Revendications

1. Procédé pour la fabrication d'un contenant de grand volume comprenant deux coquilles de contenant (10, 12) en matière plastique,
où une préforme (36) en forme de tuyau flexible en matière plastique est guidée dans l'état thermoplastique au-dessus d'un cadre de moulage (32), auquel deux moules de soufflage (26, 28) font face dans l'état ouvert,
les moules de soufflage (26, 28) sont fermés, dans lequel le cadre de moulage (32), sur le bord du moule de soufflage (26, 28) respectif et donc sur le bord extérieur de la coquille de contenant (10, 12) respective, forme un rebord (14, 16) périphérique, les coquilles de contenant (10, 12) sont réalisées simultanément dans les moules de soufflage (26, 28) par moulage par soufflage de matière plastique,
dans lequel, lors de la réalisation du rebord (14) d'une des coquilles de contenant (10), une rainure (24) périphérique destinée à recevoir ultérieurement un joint est formée conjointement sur le cadre de moulage (32) par un élément de formation de rainure (60) périphérique,
après le refroidissement de la masse de matière plastique dans les moules de soufflage (26, 28), les coquilles de contenant (10, 12) sont séparées du cadre de moulage (32) par découpe le long de celui-ci et retirées des moules de soufflage (26, 28),
au moins deux coquilles de contenant (10, 12) avec une contenance respective de 250 à 5 000 l sont transportées du lieu de fabrication à un lieu de destination et, à cet endroit, reliées au niveau de leurs rebords (14, 16) périphériques en contenant de grand volume.

2. Procédé selon la revendication 1, **caractérisé en ce que** le rebord (14, 16) est formé par pressage de la préforme (36) thermoplastique entre le moule de soufflage (26, 28) et le cadre de moulage (32).

3. Procédé selon l'une quelconque des revendications 1 ou 2, **caractérisé en ce que** le cadre de moulage (32) est constitué de plusieurs éléments de moulage (35) pouvant se rapprocher et s'éloigner les uns des autres, de sorte que, vu dans la direction transversale du tuyau flexible de la préforme (36), lors du guidage de la préforme (36) en forme de tuyau flexible, le cadre de moulage (32) présente une étendue dimensionnelle plus petite que le diamètre intérieur (D) de la préforme (36), et que, lors du moulage par soufflage de matière plastique, le cadre de moulage (32) occupe un état écarté.

4. Procédé selon l'une quelconque des revendications précédentes, **caractérisé en ce que** du polyéthylène à haut poids moléculaire est utilisé comme matière plastique.

5. Procédé selon l'une quelconque des revendications précédentes, **caractérisé en ce que** la préforme (36) est multicouche et au moins une couche présente une structure alvéolaire.

6. Procédé selon la revendication 5, **caractérisé en ce que**, pour la réalisation de la structure alvéolaire, le moule de soufflage (26, 28) respectif est réalisé de sorte qu'un vide agit sur la préforme (36).

7. Procédé selon l'une quelconque des revendications précédentes, où, lors de la réalisation du rebord (14, 16), des trous de liaison (18) sont formés conjointement.

8. Dispositif de fabrication de coquilles de contenant (10, 12) de grand volume en matière plastique,
où un dispositif d'extrusion éjecte d'une tête de fusion (34) une préforme (36) en forme de tuyau flexible en matière plastique, qui est guidée dans l'état thermoplastique au-dessus d'un cadre de moulage (32), auquel deux moules de soufflage (26, 28) font face dans l'état ouvert,
un élément de formation de rainure (60) périphérique sur le cadre de moulage (32)forme conjointement une rainure périphérique destinée à recevoir ultérieurement un joint lors de la réalisation du rebord d'une des coquilles de contenant, et
un dispositif de découpage (54) libére les coquilles de contenant par découpage le long du cadre de moulage.

9. Dispositif selon la revendication 8, **caractérisé en ce que** le cadre de moulage (32) est constitué de plusieurs éléments de moulage (35) pouvant se rapprocher et s'éloigner les uns des autres, de sorte que, vu dans la direction transversale du tuyau flexible de la préforme (36), lors du guidage de la préforme (36) en forme de tuyau flexible, le cadre de moulage (32) présente une étendue dimensionnelle plus petite que le diamètre intérieur (D) de la préforme (36), et que, lors du moulage par soufflage de matière plastique, le cadre de moulage (32) occupe un état écarté.

10. Dispositif selon l'une quelconque des revendications précédentes, **caractérisé en ce que**, pour la réalisation de la structure alvéolaire, le moule de soufflage (26, 28) respectif est conçu de sorte qu'un vide agit sur la préforme (36).

11. Dispositif selon l'une quelconque des revendications précédentes, où la coquille de contenant (10, 12) respective présente une contenance de 250 à 5 000 l, en particulier de 1 000 à 4 000 l.
